(19) Europäisches Patentamt
European Patent Office
Office européen des brevets

(11) EP 0 972 791 A2

(12) **EUROPÄISCHE PATENTANMELDUNG**

(43) Veröffentlichungstag:
**19.01.2000 Patentblatt 2000/03**

(51) Int. Cl.[7]: **C08J 9/00**, C08J 9/12
// C08L23/00

(21) Anmeldenummer: **99113026.1**

(22) Anmeldetag: **06.07.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **14.07.1998 DE 19831517**

(71) Anmelder:
**Fraunhofer-Gesellschaft zur Förderung der angewandten Forschung e.V.**
**80363 München (DE)**

(72) Erfinder:
**Ziegler, Maik, Dipl.-Ing.**
**76327 Pfinztal (DE)**

(74) Vertreter:
**Dipl.-Ing. Heiner Lichti**
**Dipl.-Phys. Dr.rer.nat. Jost Lempert**
**Dipl.-Ing. Hartmut Lasch**
**Postfach 41 07 60**
**76207 Karlsruhe (DE)**

(54) **Verfahren zur Herstellung thermoplastischer Polymerschäume**

(57) Ein Verfahren zur Herstellung von thermoplastischen Polymerschäumen aus Polyethylen, insbesondere ULD-Polyethylen und Polypropylen, wobei an das ULD-Polyethylen Alkoxy- und/oder Acetoxysilangruppen addiert, dieses in dem eine Matrix bildenden Polypropylen feindispers untergemischt, die Mischung auf eine Temperatur oberhalb der Schmelztemperatur beider Polyolefine erwärmt und das die Alkoxy- und/oder Acetoxysilangruppen ULD-Plyethylen unter katalytischer Umwandlung der Alkoxy- und/oder Acetoxysilangruppen zu Silanolgruppen über letztere unter Abspaltung von Wasser vernetzt wird, zeichnet sich dadurch aus, daß als Schäumungsinitiator ein Metallhydroxid zugesetzt wird.

EP 0 972 791 A2

**Beschreibung**

Die Erfindung betrifft ein Verfahren zur Herstellung von thermoplastischen Polymerschäumen aus Polyethylen, insbesondere ULD-Polyethylen, und Polypropylen, wobei an das ULD-Polyethylen Alkoxy- und/oder Acetoxysilangruppen addiert, dieses in dem eine Matrix bildenden Polypropylen feindispers untergemischt, die Mischung auf eine Temperatur oberhalb der Schmelztemperatur beider Polyolefine erwärmt und das die Alkoxy- und/oder Acetoxysilangruppen aufweisende ULD-Polyethylen unter katalytischer Umwandlung der Alkoxy- und/oder Acetoxysilangruppen zu Silanolgruppen über letztere unter Abspaltung von Wasser vernetzt wird.

Bei einem bekannten Verfahren der vorgenannten Art werden in einem ersten Verfahrensschritt dem ULD-Polyethylen Alkoxysilangruppen radikalisch aufgepropft. Unter ULD-Polyethylen ("Ultra low density-Polyethylen") versteht man ein Polyethylencopolymer mit einer geringen Dichte im Bereich von ca. 0,9 g/cm$^3$.

In einem zweiten Verfahrensschritt werden die Alkoxysilangruppen katalytisch zu Silanolgruppen umgesetzt. Das ULD-Polyethylen wird dann in einer Matrix aus Polypropylen feindispers emulgiert, die Emulsion zur Verschmelzung der eingesetzten Polyolefine auf Verarbeitungstemperatur erwärmt, die Vernetzungsreaktion durch Zugabe eines Katalysators, wie Dibutylzinndilaurat (DBTL), eingeleitet und als Schäumungsinitiator beispielsweise Wasser zugesetzt. Zur besseren Benetzbarkeit der dispersen Phasen können weiterhin Hilfsstoffe, wie Tenside, zugesetzt werden. Um ein vollständiges Verdampfen des für die nachfolgend beschriebene Vernetzungsreaktion erforderlichen Wassers zu verhindern, wird in der Regel außerdem Ethandiol zugesetzt.

Zur Initiierung der radikalischen Addition in der ersten Stufe eignen sich z.B. Peroxide, die unter Einwirkung von energiereichem Licht, wie UV, oder Wärme in Peroxidradikale zerfallen:

$$R\text{-}O\text{-}O\text{-}R \rightarrow 2\ R\text{-}O\bullet \qquad (1)$$

Die entstehenden Peroxidradikale spalten am Polyethylen Wasserstoffatome ab, wobei aufgrund der Mesomeriestabilisierung bevorzugt sekundäre oder tertiäre Kohlenstoffradikale gebildet werden.

$$R^1\text{-}CH_2\text{-}CH_2\text{-}CH_2\text{-}R^2 + R\text{-}O\bullet \rightarrow R^1\text{-}CH_2\text{-}HC\bullet\text{-}CH_2\bullet R^2 + R\bullet OH \qquad (2)$$

Anschließend wird das ungesättigte Alkoxysilan, beispielsweise Ethenyltrimethoxysilan, an das Kohlenstoffradikal der Polyolefinkette addiert:

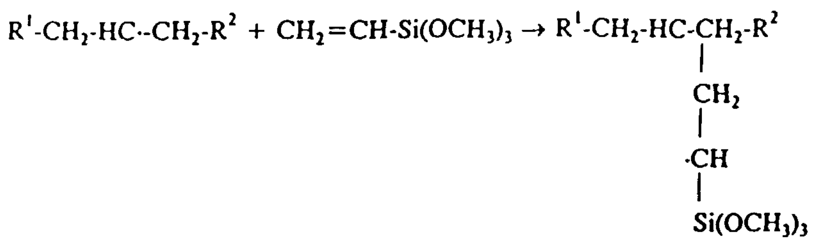

(3)

Alternativ hierzu können anstelle der Alkoxysilangruppen auch Acetoxysilangruppen $-Si(O\text{-}CO\text{-}CH_3)_3$ an das Kohlenstoffradikal der Polyolefinkette addiert werden.

In der zweiten Stufe erfolgt das Schäumen und Vernetzen des Polyethylens über die Alkoxysilangruppen, in diesem Fall Methoxygruppen, mit dem Polypropylen, wobei die Vernetzung über die katalytische Substitution der Methylreste der Methoxysilangruppen mit Wasserstoff erfolgt. Die entstehenden Silanolgruppen verbinden sich unter Abspaltung von Wasser miteinander zu Alkylsiloxanen. Die Substitution der Methylreste der Methoxysilangruppen erfolgt katalytisch, insbesondere mit DBTL, unter Abspaltung von Carbeniumionen:

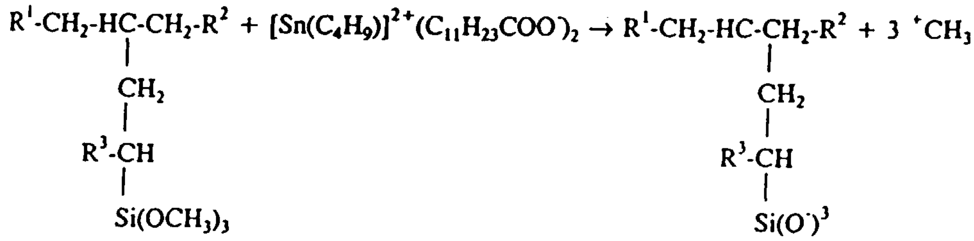

(4)

(5)

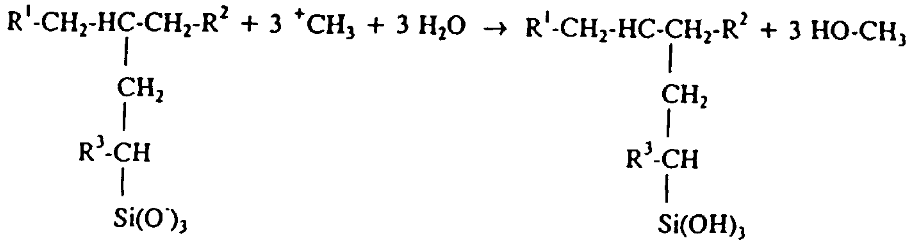

Die Kondensationsreaktion zweier Silanolgruppen unter Abspaltung von Wasser kann wie folgt beschrieben werden:

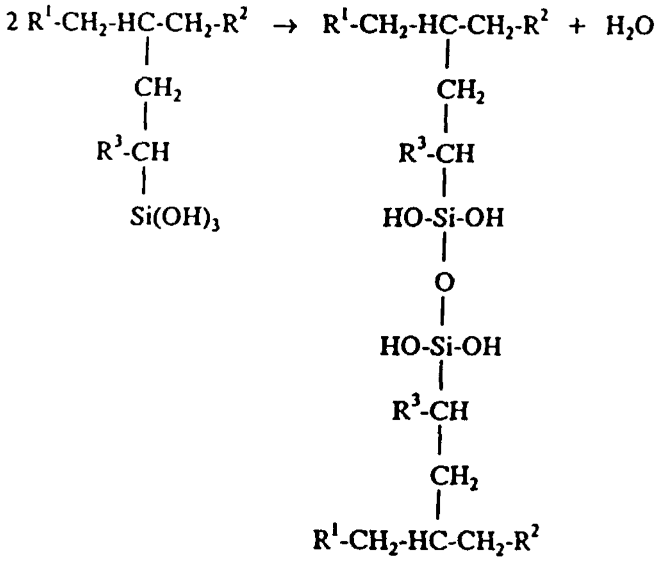

(6)

Um die gewünschten thermoplastischen Eigenschaften des Polymerschaums sicherzustellen, muß die Vernetzung der dispersen Phase (vergl. Gleichung 6) zeitgleich mit dem Schäumen erfolgen, wobei das Schäumen wie bereits erwähnt mit Wasser erfolgt, das bei der Verarbeitungstemperatur oberhalb seiner Siedetemperatur Gasbläschen bildet.

Auf diese Weise werden Polymerschäume mit einer aus anwendungstechnischen Gründen bevorzugten PP-Matrix erhalten.

Ein Problem bei bekannten Extrusionsschäumverfahren ist jedoch das Kollabieren der aus vernetzenden Polyolefinen bestehenden Zellwände aufgrund nicht ausreichender Elastizität bei der Schmelz- bzw. Schäumtemperatur. Werden beide Polyolefinkomponenten, d.h. sowohl das ULD-Polyethylen als auch das Poltypropylen, vernetzt, so wird

das Kollabieren verhindert, aber der entstehende Polymerschaum weist aufgrund zu starker Vernetzung keine thermoplastischen Eigenschaften mehr auf.

Der JP 03 109 444 A ist ein Verfahren zu entnehmen, bei dem das ULD-Polyethylen in der beschriebenen Weise mit PP vernetzt wird und ein Treibmittel in Form von Azodicarbonamid zugesetzt wird. Nachteilig hierbei ist jedoch, daß das Treibmittel während der gesamten Reaktionszeit des Vernetzungsvorgangs (vergl. Gleichung 4 bis 6) zugegeben werden muß, um eine stetige Gasentwicklung zu gewährleisten, die für die thermoplastischen Werkstoffeigenschaften des Polymerschaums erforderlich ist.

Der Erfindung liegt die Aufgabe zugrunde, das eingangs genannte Verfahren dahingehend zu verbessern, daß Polymerschäume mit einer verbesserten Schaumstruktur und guten thermoplastischen Eigenschaften erhalten werden.

Erfindungsgemäß wird diese Aufgabe bei einem Verfahren der eingangs genannten Art dadurch gelöst, daß als Treibmittel ein Metallhydroxid, insbesondere Aluminiumhydroxid, zugegeben wird.

Aluminiumhydroxid spaltet gemäß der nachfolgenden Reaktionsgleichung (7) bei Temperaturen oberhalb ca. 150°C Wasser unter Bildung von Metahydroxid ab, wobei die Wasserabspaltung kinetisch gehemmt ist, so daß bei Zugabe von Aluminiumhydroxid in die zweite Verfahrensstufe (Gleichung 4 bis 6) über den gesamten Zeitraum des Vernetzungs- und Verschmelzungsvorgangs Wasser als Treibmittel entsteht. Diese Depotwirkung des Aluminiumhydroxids sorgt für eine ständige Bläschenbildung:

$$Al(OH)_3 \rightarrow AlO(OH) + H_2O \qquad (7)$$

Die Stabilisierung des Schaums beruht auf der stark endothermen Wasserabspaltung des Aluminiumhydroxids (Gleichung 7); die Reaktionsenthalpie beträgt ca. -300 kJ/mol. Die für die Wasserabspaltung erforderliche Energie wird der Umgebung, also der Emulsion aus den Polyolefinen, entzogen, wobei die aufgeschäumten Zellen stabilisiert und ein Kollabieren der Gasbläschen zuverlässig verhindert wird.

Ein weiterer Vorteil des Einsatzes von Aluminiumhydroxid und der damit verbundenen ständigen Freisetzung von Wasser beruht auf der Tatsache, daß das Wasser nicht nur als Treibmittel dient, sondern auch zur katalytischen Umsetzung der Alkoxy- und/oder Acetoxysilangruppen in Silanolgruppen (vergl. Gleichung 4 und 5) benötigt wird. Zwar kann der Mischung schon vor dem Vernetzungsvorgang Wasser zugesetzt werden, doch können sich durch den ständigen Wasserverbrauch lokale Konzentrationsgradienten einstellen, die zu einem unvollständigen Umsatz der Alkoxysilane zu Silanolen führen.

Während die Temperatur bei der Addition der Alkoxy- bzw. Acetoxysilane an das eine Polyolefin (Gleichung 3) die Siedetemperatur des eingesetzten Alkoxy- bzw. Acetoxysilans nicht überschreiten sollte, erfolgt die Aufschäumung bzw. die Vernetzung der Polyolefine vorzugsweise bei ca. 200°C. Bei dieser Temperatur befinden sich einerseits beide Polyolefine im flüssigen Zustand, so daß die Herstellung einer feindispersen Emulsion möglich ist, andererseits findet bei dieser Temperatur eine kontinuierliche Wasserabspaltung des Aluminiumhydroxids statt.

Die erfindungsgemäß hergestellten thermoplastischen Polymerschäume sind aufgrund ihrer hohen Dichte und stabilen Schaumstruktur für technische Bauteile, insbesondere im Automobilbereich hervorragend geeignet. Aufgrund ihrer Elastizität eignen sie sich gleichermaßen für Schaumfolien und -bändchen in der Verpackungstechnik. Aufgrund der thermoplastischen PP-Matrix lassen sich die Polymerschäume gut recyclieren.

## Patentansprüche

1. Verfahren zur Herstellung von thermoplastischen Polymerschäumen aus Polyethylen, insbesondere ULD-Polyethylen, und Polypropylen, wobei an das ULD-Polyethylen Alkoxy- und/oder Acetoxysilangruppen addiert, dieses in dem eine Matrix bildenden Polypropylen feindispers untergemischt, die Mischung auf eine Temperatur oberhalb der Schmeiztemperatur beider Polyolefine erwärmt und das die Alkoxy- und/oder Acetoxysilangruppen aufweisende ULD-Polyethylen unter katalytischer Umwandlung der Alkoxy- und/oder Acetoxysilangruppen zu Silanolgruppen über letztere unter Abspaltung von Wasser vernetzt wird, dadurch gekennzeichnet, daß als Schäumungsinitiator ein Metallhydroxid zugesetzt wird.

2. Verfahren nach Anspruch 1, dadurch gekennzeichnet,
daß als Metallhydroxid Aluminiumhydroxid zugesetzt wird. 3. Verfahren nach Anspruch 1, dadurch gekennzeichnet, daß das Schäumen bei ca. 200°C erfolgt.